Europäisches Patentamt

European Patent Office

Office européen des brevets

(19)

(11) **EP 1 510 971 A1**

(12) **EUROPEAN PATENT APPLICATION**
published in accordance with Art. 158(3) EPC

(43) Date of publication:
**02.03.2005 Bulletin 2005/09**

(51) Int Cl.⁷: $G06T\ 11/40$

(21) Application number: **03730808.7**

(22) Date of filing: **03.06.2003**

(86) International application number:
**PCT/JP2003/007036**

(87) International publication number:
**WO 2003/102875 (11.12.2003 Gazette 2003/50)**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **03.06.2002 JP 2002161925**

(71) Applicant: **MITSUBISHI DENKI KABUSHIKI KAISHA**
**Chiyoda-ku Tokyo 100-8310 (JP)**

(72) Inventors:
• **KATO, Yoshiyuki, MITSUBISHI DENKI K.K.**
**Tokyo 100-8310 (JP)**
• **TORII, Akira, MITSUBISHI DENKI K.K.**
**Tokyo 100-8310 (JP)**

(74) Representative: **Gleiter, Hermann**
**Pfenning, Meinig & Partner GbR**
**Mozartstrasse 17**
**80336 München (DE)**

(54) **TRIANGLE POLYGON PLOTTING DEVICE AND TRIANGLE POLYGON PLOTTING METHOD**

(57) A triangular polygon drawing apparatus includes parameter calculating means 1 for calculating increment parameters from vertices V0 to V2 of a triangular polygon, triangle type determining means 2 for classifying the shape of the triangular polygon according to the direction and slope of a major edge of the triangular polygon so as to determine a moving direction in which pixels are to be moved, start pixel calculating means 3 for calculating various components of a start pixel, and pixel moving means 4 and pixel interpolating means 5 for generating pixels starting from the start pixel by interpolation with respect to a direction of an X axis and saving a generated pixel M that is placed inside the triangular polygon across the major edge for the first time, for generating pixels running from the major edge to a minor edge by interpolation so as to draw one scanline of said triangular polygon, and for generating a start pixel of the next scanline from the saved pixel M by interpolation with respect to a direction of a Y axis.

FIG.2

## Description

Field of the Invention

The present invention relates to a triangular polygon drawing apparatus for and a triangular polygon drawing method of decomposing a triangular polygon into pixels so as to draw the triangular polygon in a technology field of displaying a computer graphics image on a display.

Background of the Invention

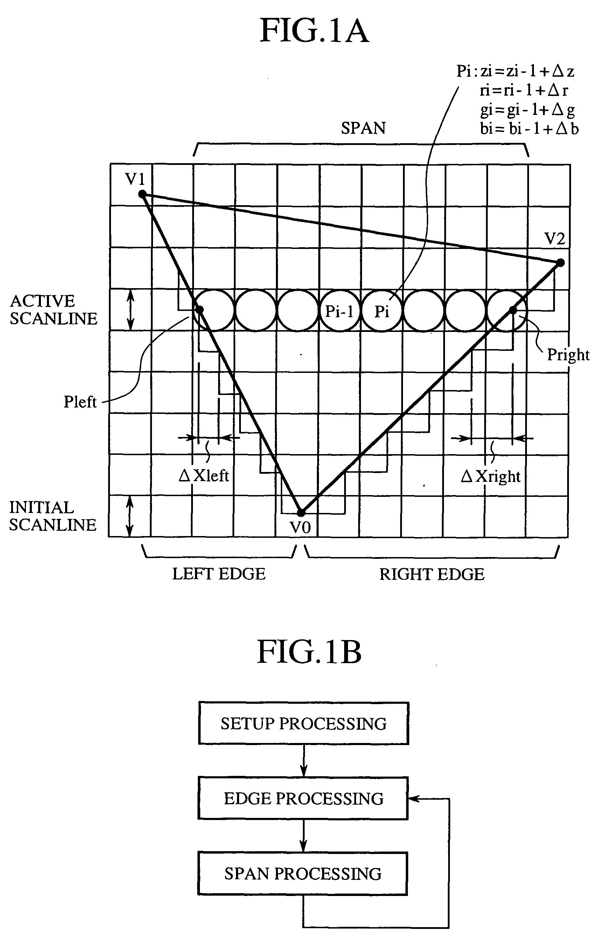

Fig. 1A is a diagram for explaining a prior art triangular polygon drawing method. For example, the following reference discloses this prior art triangular polygon drawing method of generating pixels by repeatedly performing edge and span processings.

<Reference>

"Computer Graphics Principles and Practice Second Edition", pp. 883 to 885, by James D.Foley, Andries van Dam, Steven K.Feiner, and John F.Hughes.
Next, a description will be made as to an operation of the prior art triangular polygon drawing method.
This triangular polygon drawing method is divided into three processings: a setup processing, an edge processing, and a span processing, as shown in Fig. 1B. In the setup processing, the increment parameters for a left edge, a right edge, and a span (a scanline between the right edge and the left edge, i.e., a current span) of Fig. 1A are calculated for various components of a pixel. The various components of a pixel are a depth value (z), color values (r, g, b, a), texture coordinates (s, t), and so on. The setup processing is performed on each triangular polygon only once.
In the next edge processing, a pixel Pleft on the left edge and a pixel Pright on the right edge for an active scanline are determined by an interpolation processing by using the increment parameters for the left and right edges that are determined in the setup processing. For example, the X coordinate of the left edge for the active scanline is calculated by adding the increment parameter $\Delta$Xleft to the preceding X coordinate Xold, as shown by the following equation (1) :

$$Xnew=Xold+\Delta Xleft \qquad (1)$$

In the span processing, pixels on the active scanline between the pixel Pleft on the left edge and the pixel Pright on the right edge, which are determined in the edge processing, are determined one by one by interpolation. As in the case of the edge processing, a new pixel can be determined by adding an X-direction increment parameter to each of the various components of the preceding pixel.

$$Pi=Pi-1+\Delta Px \qquad (2)$$

All pixels that constitute the triangular polygon are generated by repeatedly performing the edge and span processings for all scanlines ranging from an initial scanline including a vertex V0 to a scanline including another vertex V1.
A problem with the prior art triangular polygon drawing apparatus and the prior art triangular polygon drawing method is that when determining a pixel (Pleft) on a left edge for carrying out updating of scanlines, it is necessary to performs a calculation (subpixel correction) on a pixel value at the central point of the pixel again.
The subpixel correction process of correcting the pixel value on the edge to the value of the central point of the pixel is expressed by the following equation (3):

$$P0=Pleft+(X0-Xleft)\cdot\Delta Px \qquad (3)$$

where X0 is the X coordinate of the central point of the pixel, and $\Delta$Px is a pixel increment parameter in the direction of an X axis. The equation becomes Z0=Zleft+(X0-Xleft)·$\Delta$Zx for the Z value, for example. It can be understood from the equation (3) that a multiplication circuit having a larger circuit scale than an adding circuit is needed for the subpixel correction processing. Because the subpixel correction processing has relatively a large amount of calculations, the amount of overhead for updating of scanlines is very large and the volume of H/W components increases.
The present invention is proposed to solve the above-mentioned problems, and it is therefore an object of the present invention to provide a triangular polygon drawing method capable of eliminating the subpixel correction processing required for updating of scanlines, and of drawing a triangular polygon with simple control and with efficiency.

Disclosure of the Invention

In accordance with an aspect of the present invention, a triangular polygon drawing apparatus includes triangle type determining means for classifying a shape of a triangular polygon from data about coordinates of vertices of the triangular polygon according to a direction and slope of a major edge of the triangular polygon so as to determine a moving direction in which pixels are to be moved, and pixel drawing means for sequentially generating pixels by interpolation with respect to a direction of an X axis, the pixels starting from a start pixel that is the nearest to a point having a minimum Y coordinate or maximum Y coordinate of the triangular polygon based on the moving direction determined by the triangle type determining means, saving a generated pixel that is placed inside the triangular polygon across the major edge for a first time, and moving the generated pixel from the major edge to a minor edge so as to draw one scanline of the triangular polygon, and for generating a start pixel of a next scanline from the saved pixel by interpolation with respect to a direction of a Y axis.

Therefore, the triangular polygon drawing apparatus can determine the moving direction in which pixels are to be moved by classifying the shape of the triangular polygon into one of four types, can eliminate a subpixel correction processing with a large amount of calculations, and can draw triangular polygons with simple control and with efficiency.

In accordance with an aspect of the present invention, a triangular polygon drawing method includes the steps of classifying a shape of a triangular polygon from data about coordinates of vertices of the triangular polygon according to a direction and slope of a major edge of the triangular polygon so as to determine a moving direction in which pixels are to be moved, and sequentially generating pixels by interpolation with respect to a direction of an X axis, the pixels starting from a start pixel that is nearest to a point having a minimum Y coordinate or maximum Y coordinate of the triangular polygon based on the moving direction determined by the triangle type determining means, saving a generated pixel that is placed inside the triangular polygon across the major edge for a first time, and moving the generated pixel from the major edge to a minor edge so as to draw one scanline of the triangular polygon, and generating a start pixel of a next scanline from the saved pixel by interpolation with respect to a direction of a Y axis.

Therefore, the triangular polygon drawing method makes it possible to determine the moving direction in which pixels are drawn or moved by classifying the shape of the triangular polygon into one of four types, can eliminate a subpixel correction processing with a large amount of calculations, and can draw triangular polygons with simple control and with efficiency.

Brief Description of the Figures

Fig. 1 is a diagram for explaining a prior art triangular polygon drawing method;
Fig. 2 is a diagram showing the structure of a triangular polygon drawing apparatus according to embodiment 1 of the present invention;
Fig. 3 is a diagram for explaining an operation of the triangular polygon drawing apparatus according to embodiment 1 of the present invention;
Fig. 4 is a diagram for explaining the shapes of four types of triangular polygons to which a target triangular polygon is classified in a type determination step;
Fig. 5 is a diagram showing a direction in which pixels are drawn and stored pixels; and

Fig. 6 is a diagram showing the structure of a triangular polygon drawing apparatus according to embodiment 2 of the present invention.

Preferred Embodiments of the Invention

In order to explain the present invention in greater detail, the preferred embodiments will be described below with reference to the accompanying figures.

Embodiment 1.

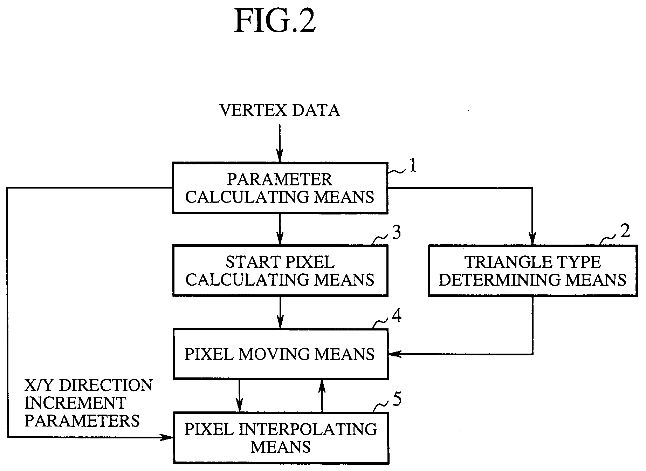

Fig. 2 is a diagram showing the structure of a triangular polygon drawing apparatus according to embodiment 1 of the present invention.

In Fig. 2, reference numeral 1 denotes parameter calculating means for calculating increment parameters from vertex data about the vertices of a target triangular polygon, reference numeral 2 denotes triangle type determining means for classifying the shape of the triangular polygon into one of four types from the increment parameters from the parameter calculating means 1, reference numeral 3 denotes start pixel calculating means for calculating a start pixel from the increment parameters from the parameter calculating means 1, reference numeral 4 denotes pixel moving means (i.e., pixel drawing means) for moving a pixel in a direction of an X axis or direction of a Y axis according to the determination result from the triangle type determining means 2, and reference numeral 5 denotes pixel interpolating means (i.e., the pixel drawing means) for interpolating pixel values according to data from the pixel moving means 4.

Next, a description will be made as to an operation of the triangular polygon drawing apparatus according to embodiment 1 of the present invention.

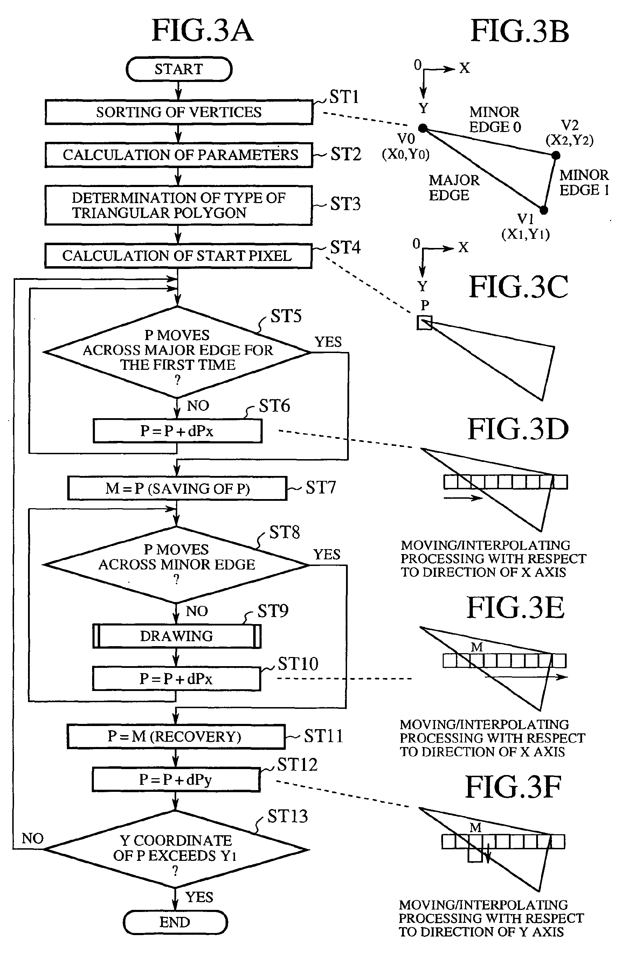

Fig. 3 is a diagram for explaining the operation of the triangular polygon drawing apparatus (i.e., a triangular polygon drawing method) according to embodiment 1 of the present invention.

In Fig. 3A, the parameter calculating means 1 sorts a triangular polygon's vertices first in a vertex sorting step ST1. This sorting is so implemented that a vertex with a minimum Y coordinate (referred to as a minimum Y coordinate vertex from here on) is defined as $V0(X0,Y0)$, a vertex with a maximum Y coordinate (referred to as a maximum Y coordinate vertex from here on) is defined as $V1(X1,Y1)$, and the remaining vertex is defined as $V2(X2,Y2)$ (refer to Fig. 3B). Assume that an upper-left side corner is an origin O of the X-Y coordinate system.

In the next parameter calculation step ST2, the parameter calculating means 1 calculates increment parameters with respect to both the direction of the X axis and the direction of the Y axis for each of the various components of a pixel from the vertex data V0, V1, and V2 of the triangular polygon. The various components of a pixel are a depth value (Z) , color values (R,G,B,A), texture coordinates (U,V), and so on. For example, when the Z values of the vertices V0, V1, and V2 are z1, z2, and z3, respectively, the X-direction increment parameter dZdx and Y-direction increment parameter dZdy for the Z component are calculated by using the equations of planes and are given by the following equations (4) and (5):

$$dZdx=\{(y1-y0)\cdot(z2-z1) - (z1-z0)\cdot(y2-y1)\}/C \quad (4)$$

$$dZdy=\{(z1-z0)\cdot(x2-x1) - (x1-x0)\cdot(z2-z1)\}/C \quad (5)$$

where a symbol C of the equations (4) and (5) means a vector product of the triangle V0V1V2, and is given by the following equation (6):

$$C=(x2-x0)\cdot(y1-y0) - (x1-x0)\cdot(y2-y0) \quad (6)$$

Similarly, in order to determine whether a current pixel exists on which side of an edge in the parameter calculation step ST2, the parameter calculating means 1 also calculates increment parameters of an edge function with respect to both the direction of the X axis and the direction of the Y axis. The increment parameters of the edge function are calculated for each of a major edge, a minor edge 0, and a minor edge 1.

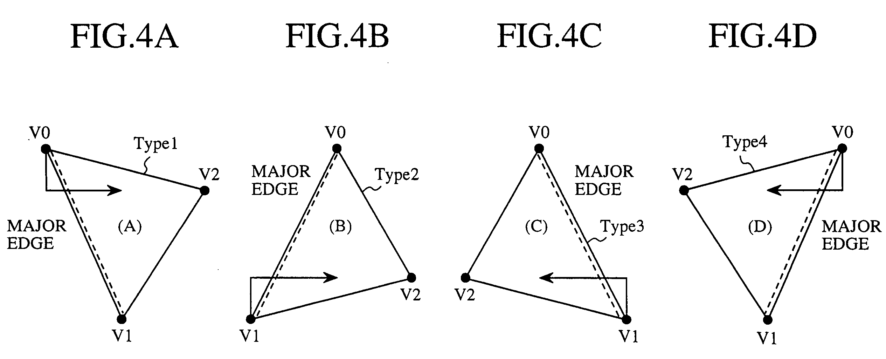

When advancing to a type determination step ST3, the triangle type determining means 2 classifies the shape of the triangular polygon into one of four types by using the sign of the vector product C or the like calculated in the parameter calculation step ST2, as shown in Fig. 4.

Fig. 4 is a diagram for explaining the shapes of the four types of triangular polygons to which the target triangular polygon is classified in the type determination step. The four types of triangular polygons have the following shapes:

Triangular polygon Type1 of Fig. 4A;

· The major edge is on the left side of the polygon.
· The X coordinate of the vertex V0 is smaller than that of the vertex V1.

Triangular polygon Type2 of Fig. 4B;

· The major edge is on the left side of the polygon.
· The X coordinate of the vertex V0 is larger than that of the vertex V1.

Triangular polygon Type3 of Fig. 4C;

· The major edge is on the right side of the polygon.
· The X coordinate of the vertex V0 is smaller from that of the vertex V1.

Triangular polygon Type4 of Fig. 4D;

· The major edge is on the right side of the polygon.
· The X coordinate of the vertex V0 is larger than that of the vertex V1.

In other words, the target triangular polygon is classified into one of the four types from the direction and slope of the major edge thereof in order to determine in which direction pixels are to be moved with respect to the direction of the X axis and in which direction pixels are to be moved with respect to the direction of the Y axis, as will be explained below. A correspondence between each of the four types of triangular polygons and the moving direction (designated by the arrow show in Figs. 4A to 4D) in which pixels are to be moved is provided as follows:

Triangular polygon Type1 of Fig. 4A;
Pixels are moved in a downward and rightward direction (i.e., the direction of the positive Y axis and the direction of the positive X axis) with respect to the vertex V0.
Triangular polygon Type2 of Fig. 4B;
Pixels are moved in an upward and rightward direction (i.e., the direction of the negative Y axis and the direction of the positive X axis) with respect to the vertex V1.
Triangular polygon Type3 of Fig. 4C;
Pixels are moved in an upward and leftward direction (i.e., the direction of the negative Y axis and the direction of the negative X axis) with respect to the vertex V1.
Triangular polygon Type4 of Fig. 4D;
Pixels are moved in a downward and leftward direction (i.e., the direction of the positive Y axis and the direction of the negative X axis) with respect to the vertex V0.

In the start pixel calculation step ST4, the start pixel calculating means 3 calculates a start pixel by using the increment parameters calculated in the parameter calculation step ST2 (refer to Fig. 3C). The start pixel is calculated as the component values of the central point of a pixel that is the nearest to the vertex V0 or V1 (subpixel correction). For example, the Z component of the start pixel is calculated by using the following equation (7):
where px0 and py0 are the X and Y coordinates of the start pixel, respectively, and are integers.

$$Zstart=z0+(px0-x0)\cdot dZdx+(py0-y0)\cdot dZdy \qquad (7)$$

Next, in steps ST5 and ST6, interpolation is carried out with respect to the direction of the X axis until the current pixel moves across the major edge (i.e., while NO in step ST5) (refer to step ST6 and Fig. 3D). In which direction the current pixel is to be moved with respect to the X axis is determined based on the result obtained in the type determination step ST3. The interpolation process is performed by adding the X direction increment parameter calculated in step ST2 to each component of the current pixel. For example, the interpolation processing for the Z component of the current pixel is calculated by using the following equation (8):

$$Znew=Zcurrent+dZdx \qquad (8)$$

When the current pixel moves across the major edge (i. e., when YES in step ST5), the component values of the pixel is stored (or saved) as a pixel M (in step ST7). This stored pixel M is a pixel that is used for triggering a shift o the next scanline processing.

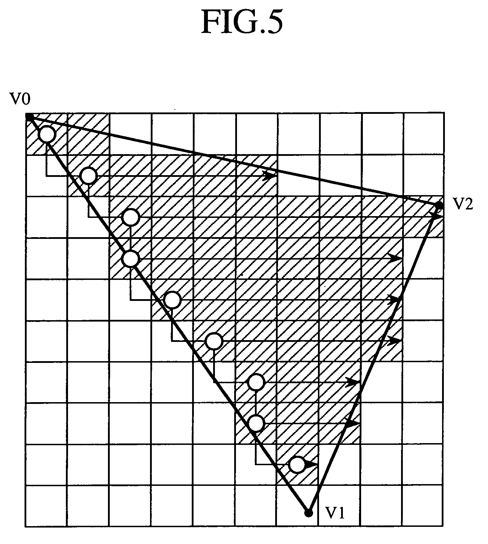

Fig. 5 is a diagram showing a direction in which pixels are drawn and stored pixels M. In Fig. 5, each circle shows a pixel that is to be stored as a pixel M. By determining the sign of the edge function, whether or not the current pixel moves across the major edge can be easily determined.

In steps ST8, ST9, and ST10, pixels are generated and drawn by interpolation with respect to the direction of the X axis until the current pixel moves across the minor edge 0 or minor edge 1 (i.e., while NO in step ST8) (refer to steps ST9 and ST10, and Fig. 3E). In which direction pixels are drawn or moved with respect to the X axis is determined based on the determination result obtained in the type determination step ST3. The interpolation processing is performed by adding the X-direction increment parameter calculated in step ST2 to each component value of the current pixel. Generation and drawing of pixels for one scanline can be carried out according to these steps.

When the current pixel moves over one of the minor edges (i.e., when YES in step ST8) and then the method advances to step ST11, the pixel M stored in step ST7 is recovered and the pixel M is set to the current pixel. Then, in steps ST12 and ST13, if the Y coordinate of the current pixel does not exceed Y1, interpolation with respect the direction of the Y axis is carried out (refer to Fig. 3F). In which direction pixels are drawn or moved with respect to the Y axis is determined based on the determination result obtained in the type determination step ST3. The interpolation processing is performed by adding the Y-direction increment parameter calculated in step ST2 to each component value of the current pixel. For example, the interpolation processing required for the Z component of the current pixel is carried out by using the following equation (9) :

$$Znew=Zcurrent+dZdy \qquad (9)$$

On the other hand, because it can be assumed that the drawing of all scanlines is completed when the Y coordinate of the current pixel exceeds Y1 (i.e., when YES in step ST13), the drawing of the target triangular polygon is completed at that time.

Thus, the moving direction in which pixels are drawn or moved is determined according to the classification of the triangular polygon as shown in Fig. 4, and interpolation is implemented with respect to the direction of the X axis to generate pixels starting from the start pixel that is the nearest to the vertex V0 or V1. The pixel M that is placed inside the triangular polygon across the major edge of the triangular polygon for the first time is saved, and the interpolation and drawing processings are carried out so as to generate pixels running in the direction of the X axis until the current pixel moves across the minor edge 0 or minor edge 1.

When updating of scanlines is carried out, the saved pixel M is recovered and interpolation with respect to the direction of the Y axis is implemented on the pixel M. Then, interpolation with respect to the direction of the Y axis is implemented for the next scanline based on the interpolated pixel M. Therefore, when shifting to the next scanline, because the interpolated pixel M is positioned outside the triangular polygon with few exceptions, the interpolation with respect to the direction of the X axis is implemented so that the current pixel is moved toward the major edge. Conversely speaking, the classification as shown in Fig. 4, the start pixel, and the moving direction in which pixels are to be moved with respect to the X and Y axes so that the interpolation of the pixel M with respect to the direction of the Y axis results in the interpolated pixel M being positioned outside the triangular polygon with few exceptions, and the interpolation with respect to the direction of the X axis is implemented to move the current pixel toward the major edge.

After that, interpolation and drawing are repeatedly performed so as to generate pixels running in the direction of the X axis until the current pixel is placed outside the triangular polygon across a minor edge after being placed inside the triangular polygon across the major edge for the first time (i.e., interpolation and drawing are repeatedly performed until the current pixel exceeds the Y coordinate of the vertex V1 or V0). Therefore, because only a simple addition is needed for the updating of scanlines, the amount of calculations can be controlled and the amount of overhead for the updating of scanlines can be reduced (i.e., the volume of H/ W components can be reduced).

As mentioned above, according to the embodiment 1, the triangular polygon drawing apparatus includes the parameter calculating means 1 (i.e., the parameter calculation step) for calculating the increment parameters with respect to the directions of the X and Y axes for the various components of a pixel from the vertex V0, vertex V1, and vertex V2 of a triangular polygon, the triangle type determining means 2 (i.e., the triangle type determination step) for classifying the shape of the triangular polygon into one of four types according to the direction and slope of a majors edge of triangular polygon so as to determine the moving direction in which pixels are to be moved, the start pixel calculating means 3 (i.e., the start pixel calculation step) for calculating the various components of a start pixel that is the nearest to the vertex V0 or V1, and the pixel moving means 4 and the pixel interpolating means 5 for generating pixels by interpolation with respect to the direction of the X axis from the start pixel and saving a generated pixel M that is placed inside the triangular polygon across the major edge for the first time, for generating pixels running from the major edge to a minor edge by interpolation so as to draw one scanline of said triangular polygon, and for generating a start pixel of the next scanline from the saved pixel M by interpolation with respect to the direction of the Y axis. Therefore, the triangular polygon drawing apparatus of this embodiment can determine the moving direction in which pixels are drawn or moved by classifying the shape of the triangular polygon into one of four types, can eliminate a subpixel correction processing with a large amount of calculations, and can draw triangular polygons with simple control and with efficiency.

Furthermore, in accordance with embodiment 1, when the triangle type determining means determines that the major edge is on the left side of the triangular polygon and the triangular polygon has a minimum Y coordinate vertex whose X coordinate is smaller than that of a maximum Y coordinate vertex thereof, the pixel drawing means sequentially draws pixels of one scanline by moving a start pixel that is the nearest to the minimum Y coordinate vertex in the direction of the positive X axis and the direction of the positive Y axis. Therefore, the triangular polygon drawing apparatus of this embodiment can determine the moving direction in which pixels are drawn or moved according to the shape of the triangular polygon, can eliminate a subpixel correction processing with a large amount of calculations, and can draw triangular polygons with simple control and with efficiency.

Furthermore, in accordance with embodiment 1, when the triangle type determining means determines that the major edge is on the left side of the triangular polygon and the triangular polygon has a minimum Y coordinate vertex whose X coordinate is larger than that of a maximum Y coordinate vertex thereof, the pixel drawing means sequentially draws pixels of one scanline by moving a start pixel that is the nearest to the maximum Y coordinate vertex in the direction of the positive X axis and the direction of the negative Y axis. Therefore, the triangular polygon drawing apparatus of this embodiment can determine the moving direction in which pixels are drawn or moved according to the shape of the triangular polygon, can eliminate a subpixel correction processing with a large amount of calculations, and can draw triangular polygons with simple control and with efficiency.

Furthermore, in accordance with embodiment 1, when the triangle type determining means determines that the major edge is on the right side of the triangular polygon and the triangular polygon has a minimum Y coordinate vertex whose X coordinate is smaller than that of a maximum Y coordinate vertex thereof, the pixel drawing means sequentially draws pixels of one scanline by moving a start pixel that is the nearest to the minimum Y coordinate vertex in the direction of the negative X axis and the direction of the negative Y axis. Therefore, the triangular polygon drawing apparatus of this embodiment can determine the moving direction in which pixels are drawn or moved according to the shape of the triangular polygon, can eliminate a subpixel correction processing with a large amount of calculations, and can draw triangular polygons with simple control and with efficiency.

Furthermore, in accordance with embodiment 1, when the triangle type determining means determines that the major edge is on the right side of the triangular polygon and the triangular polygon has a minimum Y coordinate vertex whose X coordinate is larger than that of a maximum Y coordinate vertex thereof, the pixel drawing means sequentially draws pixels of one scanline by moving a start pixel that is the nearest to the maximum Y coordinate vertex in the direction of the negative X axis and the direction of the positive Y axis. Therefore, the triangular polygon drawing apparatus of this embodiment can determine the moving direction in which pixels are drawn or moved according to the shape of the triangular polygon, can eliminate a subpixel correction processing with a large amount of calculations, and can draw triangular polygons with simple control and with efficiency.

Embodiment 2.

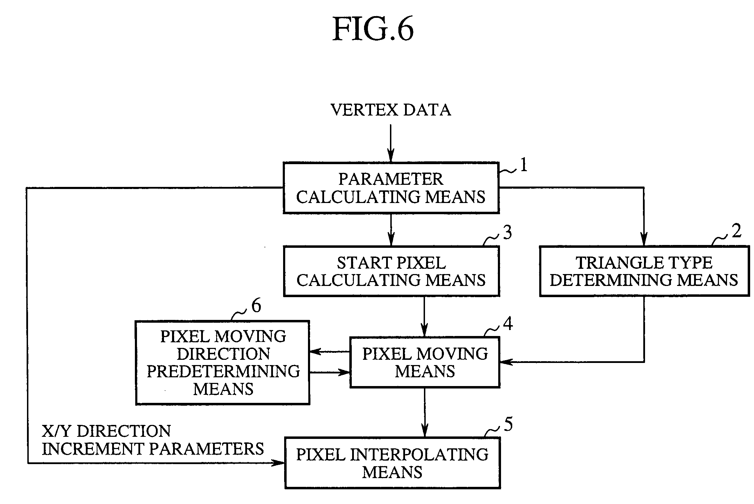

Fig. 6 is a diagram showing the structure of a triangular polygon drawing apparatus according to embodiment 2 of the present invention. The same reference numerals as shown in Fig. 2 denote the same components as those of the triangular polygon drawing apparatus according to embodiment 1 or like components.

In Fig. 6, reference numeral 6 denotes pixel moving direction predetermining means (i.e., pixel drawing means) for determining a moving direction in which pixels are to be moved in advance by determining whether pixels are placed inside or outside a target triangular polygon.

The triangular polygon drawing apparatus of this embodiment 2 basically operates in the same way that that of embodiment 1 does. However, the triangular polygon drawing apparatus of this embodiment 2 differs from that of embodiment 1 in that it predetermines the moving direction in which pixels are to be moved by calculating the values of edge functions in advance. In other words, without performing additions for the edge functions and additions for pixels (e.g., for their Z values) at the same time, the triangular polygon drawing apparatus can perform additions for the edge functions in advance (e.g., prior to additions for pixels by one clock cycle) and can predetermine whether or not pixels are made to move across a minor edge.

Because the triangular polygon drawing apparatus moves pixels and performs interpolation on a pixel-by-pixel basis without performing an interpolation processing along any edge of the triangular polygon, a subpixel correction processing for updating of scanlines becomes unnecessary. As a result, while the complex arithmetic processing becomes unnecessary and the drawing speed can be improved, the volume of H/W components can be reduced.

As mentioned above, according to embodiment 2, because the triangular polygon drawing apparatus includes the pixel moving direction predetermining means 6 for predetermining the moving direction in which pixels are to be moved by calculating the values of the edge functions in advance and then determining whether pixels are placed inside or outside a target triangular polygon, a useless addition processing required for pixels (e.g., for pixels that are made to move across a minor edge) with respect to a direction of an X axis and a direction of a Y axis becomes unnecessary and the drawing efficiency can be further improved.

Industrial Applicability

As mentioned above, the triangular polygon drawing apparatus and triangular polygon drawing method in accordance with the present invention are suitable for an image display of triangular polygons with simple control and with efficiency.

**Claims**

1. A triangular polygon drawing apparatus for decomposing a triangular polygon into pixels so as to draw the triangular polygon, **characterized in that** said apparatus comprises:

   triangle type determining means for classifying a shape of the triangular polygon from data about coordinates of vertices of the triangular polygon according to a direction and slope of a major edge of the triangular polygon so as to determine a moving direction in which pixels are to be moved; and
   pixel drawing means for sequentially generating pixels by interpolation with respect to a direction of an X axis, the pixels starting from a start pixel that is nearest to a point having a minimum Y coordinate or maximum Y coordinate of said triangular polygon based on the moving direction determined by said triangle type determining means, saving a generated pixel that is placed inside the triangular polygon across the major edge for a first time, and moving said generated pixel from the major edge to a minor edge so as to draw one scanline of said triangular polygon, and for generating a start pixel of a next scanline from said saved pixel by interpolation with respect to a direction of a Y axis.

2. The triangular polygon drawing apparatus according to Claim 1, **characterized in that** when said triangle type determining means determines that the major edge of the triangular polygon is on a left side of the triangular polygon, and the triangular polygon has a vertex with a minimum Y coordinate whose X coordinate is smaller than that of another vertex with a maximum Y coordinate, said pixel drawing means sequentially moves a pixel from a start pixel that is the nearest to the vertex with a minimum Y coordinate minimum in a direction of a positive X axis and in a direction of a positive Y axis so as to draw the triangular polygon.

3. The triangular polygon drawing apparatus according to Claim 1, **characterized in that** when said triangle type determining means determines that the major edge of the triangular polygon is on a left side of the triangular polygon, and the triangular polygon has a vertex with a minimum Y coordinate whose X coordinate is larger than that of another vertex with a maximum Y coordinate, said pixel drawing means sequentially moves a pixel from a start pixel that is the nearest to the vertex with a maximum Y coordinate in a direction of a positive X axis and in a direction of a negative Y axis so as to draw the triangular polygon.

4. The triangular polygon drawing apparatus according to Claim 1, **characterized in that** when said triangle type determining means determines that the major edge of the triangular polygon is on a right side of the triangular polygon, and the triangular polygon has a vertex with a minimum Y coordinate whose X coordinate is smaller than that of another vertex with a maximum Y coordinate, said pixel drawing means sequentially moves a pixel from a start pixel that is the nearest to the vertex with a maximum Y coordinate in a direction of a negative X axis and in a direction of a negative Y axis so as to draw the triangular polygon.

5. The triangular polygon drawing apparatus according to Claim 1, **characterized in that** when said triangle type determining means determines that the major edge of the triangular polygon is on a right side of the triangular polygon, and the triangular polygon has a vertex with a minimum Y coordinate whose X coordinate is larger than that of another vertex with a maximum Y coordinate, said pixel drawing means sequentially moves a pixel from a start pixel that is the nearest to the vertex with a minimum Y coordinate in a direction of a negative X axis and in a direction of a positive Y axis so as to draw the triangular polygon.

6. The triangular polygon drawing apparatus according to Claim 1, **characterized in that** said pixel drawing means predetermines whether each of the pixels are inside or outside said triangular polygon and predetermines the direction in which pixels are to be moved.

7. A triangular polygon drawing method for decomposing a triangular polygon into pixels so as to draw the triangular polygon, **characterized in that** said method comprises the steps of: classifying a shape of the triangular polygon from data about coordinates of vertices of the triangular polygon according to a direction and slope of a major edge of the triangular polygon so as to determine a moving direction in which pixels are to be moved; and sequentially generating pixels by interpolation with respect to a direction of an X axis, the pixels starting from a start pixel that is nearest to a point having a minimum Y coordinate or maximum Y coordinate of said triangular polygon based on the moving direction determined by said triangle type determining means, saving a generated pixel that is placed inside the triangular polygon across the major edge for a first time, and moving said generated pixel from the major edge to a minor edge so as to draw one scanline of said triangular polygon, and generating a start pixel of a next scanline from said saved pixel by interpolation with respect to a direction of a Y axis.

# FIG.1A

$$Pi : zi = zi\text{-}1 + \triangle z$$
$$ri = ri\text{-}1 + \triangle r$$
$$gi = gi\text{-}1 + \triangle g$$
$$bi = bi\text{-}1 + \triangle b$$

SPAN

V1

V2

ACTIVE
SCANLINE

Pi-1  Pi

Pright

Pleft

$\triangle$ Xleft

$\triangle$ Xright

INITIAL
SCANLINE

V0

LEFT EDGE          RIGHT EDGE

# FIG.1B

SETUP PROCESSING

EDGE PROCESSING

SPAN PROCESSING

# FIG.2

VERTEX DATA

↓

PARAMETER CALCULATING MEANS ~1

↓

START PIXEL CALCULATING MEANS ~3

↓

PIXEL MOVING MEANS ~4

↓↑

PIXEL INTERPOLATING MEANS ~5

TRIANGLE TYPE DETERMINING MEANS ~2

X/Y DIRECTION INCREMENT PARAMETERS

EP 1 510 971 A1

EP 1 510 971 A1

## FIG.3A

START

SORTING OF VERTICES — ST1

CALCULATION OF PARAMETERS — ST2

DETERMINATION OF TYPE OF TRIANGULAR POLYGON — ST3

CALCULATION OF START PIXEL — ST4

ST5 — P MOVES ACROSS MAJOR EDGE FOR THE FIRST TIME ? — YES

NO

P = P + dPx — ST6

M = P (SAVING OF P) — ST7

ST8 — P MOVES ACROSS MINOR EDGE ? — YES

NO

DRAWING — ST9

P = P + dPx — ST10

P = M (RECOVERY) — ST11

P = P + dPy — ST12

NO — ST13 — Y COORDINATE OF P EXCEEDS Y1 ?

YES

END

## FIG.3B

0 → X
Y

V0 (X0,Y0)
MINOR EDGE 0
V2 (X2,Y2)
MAJOR EDGE
MINOR EDGE 1
V1 (X1,Y1)

## FIG.3C

0 → X
Y
P

## FIG.3D

MOVING/INTERPOLATING PROCESSING WITH RESPECT TO DIRECTION OF X AXIS

## FIG.3E

M

MOVING/INTERPOLATING PROCESSING WITH RESPECT TO DIRECTION OF X AXIS

## FIG.3F

M

MOVING/INTERPOLATING PROCESSING WITH RESPECT TO DIRECTION OF Y AXIS

11

# FIG.4A

# FIG.4B

# FIG.4C

# FIG.4D

EP 1 510 971 A1

# FIG.5

# FIG.6

VERTEX DATA

PARAMETER
CALCULATING MEANS          ~1

START PIXEL
CALCULATING MEANS          ~3

TRIANGLE TYPE
DETERMINING MEANS          ~2

PIXEL MOVING
DIRECTION
PREDETERMINING          ~6
MEANS

PIXEL MOVING
MEANS          ~4

X/Y DIRECTION
INCREMENT PARAMETERS

PIXEL INTERPOLATING
MEANS          ~5

EP 1 510 971 A1

**EP 1 510 971 A1**

## INTERNATIONAL SEARCH REPORT

| International application No. |
|---|
| PCT/JP03/07036 |

**A. CLASSIFICATION OF SUBJECT MATTER**
Int.Cl$^7$ G06T11/40

According to International Patent Classification (IPC) or to both national classification and IPC

**B. FIELDS SEARCHED**

Minimum documentation searched (classification system followed by classification symbols)
Int.Cl$^7$ G06T11/00-11/40, 15/00-17/30

Documentation searched other than minimum documentation to the extent that such documents are included in the fields searched
Jitsuyo Shinan Koho 1922-1996 Toroku Jitsuyo Shinan Koho 1994-2003
Kokai Jitsuyo Shinan Koho 1971-2003 Jitsuyo Shinan Toroku Koho 1996-2003

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 8-7123 A (Nippon Steel Corp.), 12 January, 1996 (12.01.96), Full text; all drawings (Family: none) | 1-7 |
| Y | JP 7-105404 A (Ricoh Co., Ltd.), 21 April, 1995 (21.04.95), Full text; all drawings (Family: none) | 1-7 |
| Y | JP 8-101921 A (Sony Corp.), 16 April, 1996 (16.04.96), Full text; all drawings (Family: none) | 2-5 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 17 July, 2003 (17.07.03) | 05 August, 2003 (05.08.03) |

| Name and mailing address of the ISA/ Japanese Patent Office | Authorized officer |
|---|---|
| Facsimile No. | Telephone No. |

Form PCT/ISA/210 (second sheet) (July 1998)

15

**EP 1 510 971 A1**

<table>
<tr><td colspan="2">INTERNATIONAL SEARCH REPORT</td><td>International application No.<br>PCT/JP03/07036</td></tr>
</table>

C (Continuation).  DOCUMENTS CONSIDERED TO BE RELEVANT

| Category* | Citation of document, with indication, where appropriate, of the relevant passages | Relevant to claim No. |
|---|---|---|
| A | JP 2001-209369 A  (Mitsubishi Electric Corp.),<br>03 August, 2001 (03.08.01),<br>Full text; all drawings<br>& US 6580429 B1 | 1-7 |
| A | JP 10-261107 A  (Fujitsu Ltd.),<br>29 September, 1998 (29.09.98),<br>Full text; all drawings<br>(Family: none) | 1-7 |

Form PCT/ISA/210 (continuation of second sheet) (July 1998)